(19) Europäisches Patentamt
European Patent Office
Office européen des brevets

(11) Numéro de publication : **0 221 606 B1**

(12) # FASCICULE DE BREVET EUROPEEN

(45) Date de publication du fascicule du brevet : **02.01.91 Bulletin 91/01**

(51) Int. Cl.$^5$ : **G02B 27/00,** G03B 33/00

(21) Numéro de dépôt : **86201864.5**

(22) Date de dépôt : **24.10.86**

(54) **Dispositif optique de prise de vue ou de projection.**

(30) Priorité : **29.10.85 FR 8516041**

(43) Date de publication de la demande : **13.05.87 Bulletin 87/20**

(45) Mention de la délivrance du brevet : **02.01.91 Bulletin 91/01**

(84) Etats contractants désignés : **DE FR GB NL**

(56) Documents cités :
**GB-A- 418 562**
**PATENT ABSTRACTS OF JAPAN, vol. 8, no. 144 (P-284)[1581], 5 juillet 1984; & JP - A - 59 44017**

(73) Titulaire : **LABORATOIRES D'ELECTRONIQUE PHILIPS**
**3, Avenue Descartes**
**F-94450 Limeil-Brévannes (FR)**
**FR**
Titulaire : **N.V. Philips' Gloeilampenfabrieken**
**Groenewoudseweg 1**
**NL-5621 BA Eindhoven (NL)**
**DE GB NL**

(72) Inventeur : **Hily, Claude Emile**
**Société Civile S.P.I.D. 209 rue de l'Université**
**F-75007 Paris (FR)**
Inventeur : **Martin, Guy Noel**
**Société Civile S.P.I.D. 209 rue de l'Université**
**F-75007 Paris (FR)**

(74) Mandataire : **Landousy, Christian et al**
**Société Civile S.P.I.D. 156, Boulevard Haussmann**
**F-75008 Paris (FR)**

**EP 0 221 606 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention concerne un dispositif optique de prise de vue ou de projection, comportant au moins deux objectifs L1, L2,... dont les axes optiques sont parallèles à un axe général de symétrie du dispositif, doté d'un système de mise au point permettant la formation des images, sur ou bien la projection à partir d'un plan de référence fixe, par translation simultanée des objectifs parallèlement à l'axe général de symétrie, et comportant, pour réduire la parallaxe engendrée par les objectifs, un système de lames à faces parallèles $M_1$, $M_2$,... qui admet pour axe de symétrie l'axe général de symétrie du dispositif optique, chaque lame à faces parallèles étant placée entre chaque objectif et un plan de référence fixe ($P'_0$) et inclinée sur l'axe optique de l'objectif auquel elle est appliquée d'un angle $\alpha$ prévu en fonction de l'épaisseur et de l'indice du matériau de la lame, ainsi qu'en fonction des grandeurs focales et des distances entre objectifs, pour produire un décalage transverse $\Delta Y'_0$ constant des points du plan de référence fixe conjugués des points de l'axe général de symétrie X'X du dispositif, quelle que soit la position de ces points sur cet axe, et la rotation $\alpha$ des lames étant en corrélation avec le système de mise au point des objectifs.

L'invention trouve son application dans les systèmes de prise de vue ou projection trichromes comportant trois objectifs dont les axes optiques sont parallèles, ces objectifs étant couplés avec des tubes amplificateurs d'image par exemple, ou bien avec des tubes de prise de vue ou projection.

Les lois de l'optique nous enseignent que, l'image d'un point objet non situé sur l'axe optique d'un objectif donné est un point également non situé sur l'axe optique. De telle sorte que lorsqu'un point objet se déplace le long d'un axe parallèle à l'axe optique de l'objectif, la nouvelle position du point image se déduit de la précédente par la combinaison d'une translation parallèlement à l'axe optique et d'une translation perpendiculairement à cet axe.

Ceci conduit au fait que, lorsqu'au moins deux objectifs forment chacun un point image à partir d'un même point objet, et lorsque ce point objet se déplace parallèlement aux axes optiques de ces objectifs sur l'axe de symétrie général du système, les points images obtenus se déplacent d'une part parallèlement aux axes optiques et d'autre part perpendiculairement à ces axes en sens contraire.

Il s'ensuit que si l'on désire former une image unique à partir des images obtenues individuellement par chaque objectif, par superposition de ces images, les images des points autres que ceux qui sont situés à l'infini ne peuvent être superposées.

Ainsi, par erreur de parallaxe, il faut entendre l'erreur provoquée par le défaut décrit ci-dessus.

Or, il est connu à ce jour, de par les dispositifs optiques actuellement commercialisés, de diminuer cette erreur de parallaxe en inclinant légèrement, lors de la mise au point, les axes optiques des différents objectifs par rapport à l'axe général du système.

Mais cette solution conduit à des réglages qui sont toujours très délicats et imparfaits, puisqu'il subsiste un défaut consistant en une déformation en trapèze de l'image produite par chaque objectif, ce défaut produisant lors de la superposition des images individuelles pour obtenir une image unique, une déformation spatiale impossible à corriger.

Il est également connu du brevet GB 418 562, un dispositif de prise de vue ou de projection à plusieurs voies muni de moyens pour corriger l'erreur de parallaxe. Ce dispositif est constitué principalement d'une lunette formée d'une optique divergente et d'une optique convergente qui a pour axe optique l'axe de symétrie du système. Cette lunette présente une grande ouverture numérique, est afocale, et a un grandissement inférieur à 1. Ce dispositif comprend ensuite, assemblés d'une manière solidaire à cette lunette, une pluralité d'objectifs convergents disposés autour de l'axe de symétrie général du système, sur le trajet des faisceaux qui traversent la lunette. Ces objectifs ont des axes optiques parallèles à l'axe de symétrie. Ils sont de faible diamètre et à une faible distance les uns des autres

La lunette est un élément essentiel pour la diminution de l'erreur de parallaxe introduite par la pluralité d'objectifs, du fait qu'elle diminue la divergence des faisceaux lorsque l'objet visé ne se trouve pas à l'infini.

Ce dispositif comprend en outre, éventuellement, une pluralité de lames à faces parallèles, ou de prismes, en nombre égal, ou inférieur à celui des objectifs, inclinées sur l'axe optique des objectifs d'un angle qui peut être différent d'un objectif à l'autre, et disposées entre les objectifs et le plan sur lequel s'effectue la mise au point d'une scène photographiée. Selon le document cité le réglage de l'angle d'inclinaison se fait par rotation autour d'un axe proche de l'axe général de symétrie au moyen de vis pour obtenir la translation des autres extrémités des lames. L'ensemble des lames et l'ensemble formé par les extrémités des objectifs peuvent éventuellement être montés au moyen d'un anneau à double filetage, le premier filetage permettant la mise au point du bloc solidaire formé par la lunette et les objectifs, le second filetage permettant l'ajustage de l'angle au sommet de la pyramide formée par les lames assemblées.

Le réglage de la parallaxe est fait pour un plan de la scène à photographier, ce plan étant choisi de manière telle que les plans plus proches des objectifs fournissent un dépointage transverse dans un sens

par rapport à celui du plan choisi et les plans plus éloignés un dépointage transverse à peu près égal et dans un sens opposé, de manière à répartir les défauts qui subsistent malgré l'utilisation du dispositif décrit dans le document cité.

C'est pourquoi la présente invention propose de pallier cet inconvénient à l'aide d'un dispositif tel que décrit dans le préambule et caractérisé en ce que, les lames à faces parallèles étant maintenues dans un plan-support, l'inclinaison des lames $M_1$, $M_2$... sur l'axe optique des objectifs est obtenue par la rotation du plan-support des lames autour d'un axe fixe $K_1$, $K_2$... perpendiculaire à un plan défini par l'axe optique de l'objectif et l'axe général de symétrie X'X du système, de telle sorte que les plans-supports des lames se coupent en un point $K_0$ de l'axe général de symétrie X'X, dont le mouvement sur cet axe est lié par une relation linéaire à la rotation $\alpha$ des lames, en ce que le système permettant la corrélation de la rotation des lames à faces parallèles avec le système de mise au point des objectifs est un dispositif mécanique engendrant la translation du point mobile $K_0$ d'intersection des plans-supports des lames sur l'axe général X'X de symétrie et engendrant de façon solidaire une translation simultanée et proportionnelle des objectifs $L_1$, $L_2$ parallèlement à cet axe, l'amplitude de ces translations et leur sens étant prévus pour obtenir à la fois la mise au point sur le plan fixe de référence $P'_0$ et l'inclinaison appropriée $\alpha$ des lames à faces parallèles, pour obtenir ledit décalage transverse constant, et en ce que la valeur de la translation des objectifs, pour obtenir ladite mise au point sur le plan fixe $P'_0$ de référence, dans la situation de visée à l'infini, est de même grandeur que et de sens contraire à la valeur de cette translation dans la situation de visée à distance minimale, par rapport à une situation de visée intermédiaire en corrélation avec la position du point mobile $K_0$ d'intersection des lames sur l'axe de symétrie X'X pour laquelle ces lames $M_1$, $M_2$... sont perpendiculaires aux axes optiques des objectifs $L_1$, $L_2$... auxquels elles sont appliquées.

Le dispositif réalisé conformément à l'invention permet des réglages aisés et quasi-parfaits. De plus, ce dispositif est d'une fabrication simple et d'un coût faible.

L'invention sera mieux comprise à l'aide de la description qui suit illustrée par les figures annexées dont:

– les figures 1a et 1b qui montrent le trajet des rayons lumineux dans un système à deux objectifs dépourvu de dispositif de correction de la parallaxe, et dont les objectifs sont fixes.

– la figure 2a qui montre le trajet d'un rayon traversant une lame à faces parallèles ;

– la figure 2b qui montre le décalage produit par une lame à faces parallèles sur la position du centre optique d'un objectif devant lequel elle est placée ;

– les figures 3 qui montrent un système à deux objectifs muni d'un dispositif de correction de la parallaxe selon l'invention et réglé en position de visée à l'infini, le plan de projection ou de prise de vue étant un plan fixe $P'_0$, la figure 3a montrant le système dans le cas où le conjugué du plan $P'_0$ est dans une position intermédiaire, la figure 3b montrant le système dans le cas où le conjugué du plan $P'_0$ est à l'infini et la figure 3c montrant le système dans le cas où le conjugué du plan $P'_0$ est dans la position la plus rapprochée des objectifs ;

– la figure 4 qui montre un exemple de réalisation optique et mécanique du dispositif selon l'invention;

– la figure 5 qui montre la courbe représentative de la variation résiduelle du décalage transverse sur une voie, après correction à l'aide d'un dispositif selon l'invention conforme au mode de réalisation décrit à titre d'exemple.

Les figures 1 représentent, pour une meilleure compréhension de l'invention, un système optique à deux objectifs dont les axes optiques sont parallèles, et montrent le trajet des faisceaux lumineux lorsque ce système est démuni de dispositif de correction de la parallaxe

Le système optique est constitué, dans l'exemple représenté sur ces figures 1, par deux objectifs notés $L_1$ et $L_2$ qui admettent pour axes optiques respectivement $x'_1\, x_1$ et $x'_2\, x_2$, comme centres optiques respectivement $O_1$ et $O_2$ et comme foyers images respectivement $F'_1$ et $F'_2$.

Ce système optique admet comme axe général de symétrie l'axe x'x.

Tel que représenté sur la figure 1a, un point A situé sur l'axe général de symétrie x'x du système, dans un plan $P_A$ placé à la distance $P_A$ des centres des objectifs, fournit par l'objectif $L_1$ un point conjugué $A'_1$ situé dans un plan $P'_A$ conjugué du plan $P_A$, et fournit par l'objectif $L_2$ un point conjugué $A'_2$ situé dans le même plan $P'_A$, ces points $A'_1$ et $A'_2$ étant chacun à une distance $H + \Delta Y'_A$ de l'axe général de symétrie x'x.

Un point B situé dans un plan $P_B$ et sur l'axe général de symétrie x'x à une distance $P_B$ inférieure à $P_A$ des centres des objectifs fournit par l'objectif $L_1$ un point conjugé $B'_1$ et par l'objectif $L_2$ un point conjugué $B'_2$, ces points conjugués $B'_1$ et $B'_2$ étant dans le plan $P'_B$ conjugué du plan $P_B$, et à une distance $H + \Delta Y'_B$ de l'axe général de symétrie x'x.

Le plan conjugué $P'_B$ est donc plus éloigné des centres optiques que le plan conjugué $P'_A$, et la valeur de $\Delta\, Y'_B$ est plus grande que celle de $\Delta Y'_A$, les grandeurs $\Delta Y'_A$ et $\Delta Y'_B$ étant dites décalages transverses.

Enfin, les objectifs $L_1$ et $L_2$ fournissent d'un plan situé à l'infini des points conjugués situés aux foyers images $F'_1$ et $F'_2$ de ces objectifs, ces foyers étant situés à la distance f' du centre des objectifs et à une

distance H de l'axe général de symétrie x'x.

Il apparaît donc clairement que suivent la distance qui sépare un point de l'axe général de symétrie des objectifs, les conjugués sont situés dans des plans placés à des distances différentes des objectifs, et que, d'autre part ces points conjugués sont situés à des distances différentes de l'axe général de symétrie x'x.

Pour qu'un tel système puisse être utilisé en prise de vue ou bien en projection, il faut tout d'abord que les points conjugués obtenus à partir de plans situés à des distances quelconques des objectifs, se forment dans un même plan, c'est-à-dire que tous les points conjugués de tous les points de l'axe général de symétrie x'x puissent être ramenés individuellement sur un même plan de référence fixe qui sera alors le plan de prise de vue ou de projection.

Ceci est obtenu facilement par un procédé connu de l'homme du métier, consistant en la translation simultanée des objectifs parallèlement à l'axe de symétrie, au moyen d'une bague de mise au point qui permet de tourner l'objectif dans sa monture pour effectuer sa mise au point par un déplacement hélicoïdal.

Le plan fixe de référence sera noté $P'_0$ dans la suite de la description.

D'autre part pour qu'un tel système permette la reconstruction d'une image unique à partir de deux ou trois images obtenues individuellement respectivement au moyen de deux ou trois objectifs dont les axes optiques sont parallèles et qui admettent un axe général de symétrie tel x'x, il faut que les différentes valeurs du décalage transverse puissent être ramenées à une valeur fixe de référence, par exemple $\Delta Y'_0$, quelle que soit la distance entre les conjugués du plan fixe $P'_0$ et les objectifs.

Comme il a été dit précédemment, la compensation de l'erreur de parallaxe, ou compensation des variations du décalage transverse, était obtenue, dans les systèmes antérieurs à l'invention, par un basculement des objectifs dont les axes optiques n'étaient plus alors parallèles à l'axe général de symétrie du système. Ceci provoquait un défaut en trapèze de l'image obtenue à partir de chaque objectif, et lors de la recombinaison par exemple d'images monochromes pour obtenir une image polychrome, les différents défauts en trapèze venaient se combiner en sens contraire de telle sorte que l'image de recombinaison polychrome était déformée dans l'espace.

Il n'était donc pas possible de s'affranchir du défaut de parallaxe sans être soumis à un autre défaut.

La présente invention permet au contraire d'obtenir une image parfaite puisque le dispositif proposé permet de s'affranchir de l'erreur de parallaxe sans introduire d'autre défaut, en particulier de la distorsion.

Le dispositif selon la présente invention permet en effet de régler le décalage transverse des points images à une valeur de référence $\Delta Y'_0$ constante quelle que soit la position du conjugué du plan de référence fixe $P'_0$ par rapport aux objectifs. Ce résultat est obtenu au moyen de lames à faces parallèles d'épaisseur $\underline{e}$ et d'indice $\underline{n}$ inclinées d'un angle $\alpha$ sur les axes optiques des objectifs, ces axes restant parallèles à l'axe de symétrie général du système et ces lames étant placées entre les objectifs et le plan fixe de référence $P'_0$.

Il va de soi, que les objectifs de prise de vue ou de projection seront corrigés des aberrations provoquées par l'introduction des lames à faces parallèles d'indice n et d'épaisseur $\underline{e}$ placées en faisceaux convergents. De telles corrections d'aberrations, lors de la réalisation d'objectifs, sont coutumières de l'homme du métier, qui utilise à ce jour à cet effet des programmes de calcul assisté par ordinateur.

Les calculs qui suivent vont montrer comment déterminer l'épaisseur $\underline{e}$ des lames, leur indice de réfraction $\underline{n}$ et l'angle $\alpha$ d'inclinaison, pour obtenir la correction de la parallaxe, en fonction des données initiales du système, représenté sur la figure 1b, qui sont :

– la distance p entre le plan $P_c$ qui contient un point C quelconque de l'axe de symétrie x'x du système et le plan qui contient les centres des objectifs ;

– la distance p' entre le plan du centre des objectifs et le plan $P'_c$ qui contient les points conjugués du point C ;

– la distance focale f' des objectifs qui sera dite distance focale image et la distance focale f qui sera dite distance focale objet si l'on considère que le point C est l'objet, que p est la distance objet, que le plan $P'_c$ est le plan image et que p' est la distance image. Il est évident que, de par le principe de retour inverse de la lumière, les conclusions auxquelles mèneront les calculs qui vont suivre seraient tout aussi valables, si l'on dénommait au contraire les points C' objets, et les points C images.

Dans les hypothèses présentes, la conjugaison image-objet pour le système représenté sur la figure 1b obéit à la relation (1)

$$-1/p + 1/p' = 1/f \qquad (1)$$

relation dans laquelle on peut écrire que (relation 2) :

$$1/p = 1/(f' + \Delta x') \qquad (2)$$

L'expression $\Delta x'$ représente le terme de défocalisation par défaut de mise au point par rapport aux conditions dans lesquelles l'objet C est à l'infini, et ses images dans le plan focal image F' des objectifs. La distance $\Delta x'$ est donc la grandeur de la translation qu'il faut effectuer sur les centres optiques $O_1$ et $O_2$ des objectifs $L_1$ et $L_2$, parallèlement à l'axe général de symétrie x'x du système, pour amener le plan image $P'_c$ en coïncidence avec le plan focal image F' défini précédemment, lorsque l'on fait varier la position du point objet C le long de l'axe général de symétrie x'x.

Ainsi, par cette opération il est possible de maintenir le plan de formation des images $P'_c$ (ou inversement le plan de prise de vue) dans une position fixe, définie précédemment comme $P'_0$, et qui correspond aux conditions de visée à l'infini.

Or pour un objectif optique, le facteur $\Delta x'$ s'évalue en fonction du pas $\ell$ de l'hélice dont on tourne l'objectif avec sa bague de mise au point dans sa monture, pour effectuer la mise au point par translation le long de son axe optique, et en fonction de l'angle $\Delta\theta$ qui est l'angle de rotation de cette bague de mise au point compté à partir de la position de mise au point pour l'infini. Ceci s'exprime par la relation (3) :

$$\Delta x' = \ell \cdot \Delta\theta /360 \qquad (3)$$

dans laquelle $\Delta\theta$ est exprimé en degrés.

On peut alors déduire de la relation (2) la relation (4) en remplaçant $\Delta x'$ par la valeur de la relation (3):

$$-p = f'^2 \cdot (\ell \times \Delta\theta /360)^{-1} + f' \qquad (4)$$

Le grandissement G entre l'image et l'objet peut alors être écrit en s'aidant de la relation (4) d'une façon simple selon la relation (5) :

$$G = p'/p$$

$$G = (+1/f') (\ell \cdot \Delta\theta /360) \qquad (5)$$

ou encore

$$G = (+1/f') \Delta x' \qquad (6)$$

Ceci étant posé, la figure 1b montre d'autre part que les objectifs $L_1$ et $L_2$ fournissent d'un point C de l'axe général de symétrie deux points images $C'_1$ et $C'_2$ respectivement. La distance entre $C'_1$ et l'axe optique $x'_1 x_1$ de $L_1$, ou bien la distance entre C'2 et l'axe optique $x'_2 x_2$ de $L_2$ est le dépointage transverse $\Delta Y'$. Ce dépointage transverse $\Delta Y'$ est fonction à la fois de la mise au point, comme on l'a montré précédemment et illustré par la figure 1a, et de la distance 2H qui sépare les centres $O_1$ et $O_2$ des objectifs. On peut donc écrire que :

$$\Delta Y'/H = p'/|p|$$

ou encore que :

$$\Delta Y' = +H \cdot |G| \qquad (7)$$

ce qui, à l'aide de la relation (5) permet d'écrire :

$$\Delta Y' = (H/f') (\ell \cdot \Delta\theta /360) \qquad (8)$$

ou bien encore :

$$Y' = (H/f') \Delta x' \qquad (9)$$

On peut encore définir la distance D qui sépare les deux images $C'_1$ et $C'_2$ l'une de l'autre.

$$D = 2 (H + \Delta Y')$$

La distance D peut s'exprimer soit en fonction de la relation (8)

$$D = 2H + 2(H/f') (\ell .\Delta\theta /360) \quad (10)$$

ou bien en fonction de la relation (9)

$$D = 2H + 2(H/f') \Delta x' \quad (11)$$

L'ensemble de ces relations établissent qu'il est loisible de relier la distance D (ou le dépointage transverse $\Delta Y'$) aux paramètres de mise au point des objectifs qui sont $\underline{\ell}$ et $\Delta\theta$, ou à la valeur du terme de défocalisation $\Delta x'$.

Selon l'invention, et tel que représenté sur l'ensemble des figures 3, pour réduire le dépointage transverse $\Delta Y'$ et lui imposer une valeur fixe $\Delta Y'_0$, des lames à faces parallèles sont interposées entre les objectifs et le plan fixe de référence $P'_0$.

La lame appliquée à l'objectif $L_1$ est notée $M_1$ et la lame appliquée à l'objectif $L_2$ est notée $M_2$. Les lames ont une épaisseur $\underline{e}$ et un indice de réfraction $\underline{n}$, et sont inclinées sur les axes optiques d'un angle $\alpha$ situé dans le plan défini par chaque axe optique et l'axe général de symétrie x' x, de telle manière que leur placement soit symétrique par rapport à cet axe de symétrie. Le plan de chaque lame est donc perpendiculaire au plan défini par l'axe optique de l'objectif auquel elle est appliquée, et l'axe général de symétrie du système. Ceci est particulièrement important dans le cas où le système comporte plus de deux objectifs placés de manière à admettre un axe général de symétrie.

La figure 2a montre le trajet d'un rayon I'I parallèle à l'axe optique d'un objectif et traversant une telle lame à faces parallèles, par exemple $M_1$.

L'angle d'incidence du rayon I'I sur la lame est $\underline{i}$, l'angle du rayon IJ réfracté dans la lame est r, et le milieu de sortie étant ici identique au milieu d'entrée, par exemple l'air, l'angle du rayon JJ' de sortie est $\underline{i}$.

Les lois de l'optique montrent que, le rayon d'entrée I'I et le rayon de sortie JJ' étant parallèles le décalage $\Delta z$ entre le rayon d'entrée et le rayon de sortie, ou distance géométrique entre ces rayons s'écrit selon la relation (12)

$$\Delta z = e \operatorname{Sin} i \left[1 - (1-\sin^2 i)^{1/2}(n^2-\operatorname{Sin}^2 i)^{-1/2}\right] \quad (12)$$

Comme l'angle d'incidence $\underline{i}$ des rayons sur la lame est lié à l'angle d'inclinaison de la lame sur l'axe optique de l'objectif, cette relation (12) montre que l'on peut, en choisissant de façon appropriée les valeurs de l'épaisseur $\underline{e}$ et de l'indice $\underline{n}$ des lames et l'angle d'incidence i, trouver un angle $\alpha$ d'inclinaison de la lame sur l'axe optique de l'objectif, pour que le dépointage $\Delta z$ compense la variation du dépointage $\Delta Y'$ lorsque la position de l'objet devant l'objectif change. Et, comme il a été montré que le dépointage $\Delta Y'$ pouvait aussi être relié au terme de défocalisation $\Delta x'$, alors il est possible, à partir des relations précédentes, de déterminer à la fois les paramètres $\underline{e}$, $\underline{n}$ et $\Delta Y'$ (ou D) pour que le terme $\Delta x'$ soit lié à l'angle $\alpha$ par une relation linéaire.

Dans l'établissement de cette relation linéaire, il faudra toutefois tenir compte du fait que l'interposition d'une lame à faces parallèles entre l'objectif et l'image produit un dépointage des centres optiques d'une valeur $e(n-1)n^{-1}$. Cette valeur viendra s'ajouter ou se retrancher à la valeur du dépointage $\Delta x'$ suivant le sens de ce dernier, mais aussi suivant le sens du basculement de la lame à faces parallèles. Cette valeur jouera donc le rôle d'une constante dans le système selon l'invention.

La figure 2b montre que, par exemple, le centre de l'objectif $L_1$ réellement placé à la position $O_1$ est vu à travers la lame comme étant à la position $O'_1$ telle que $O'_1O_1 = e(n-1)n^{-1}$

Le dispositif selon l'invention permet donc d'obtenir un décalage $\Delta z$ tel qu'il compense les variations du décalage transverse $\Delta y'$ afin que ce dernier conserve une valeur constante voulue $\Delta Y'_0$, quelle que soit la position du plan objet. Ce dispositif permet en outre de conserver le système optique dans les conditions de visée à l'infini, c'est-à-dire de choisir le dépointage $\Delta x'$ corrigé du terme $e(n-1)n^{-1}$, pour que le plan sur lequel se forme les images, quelle que soit la position du plan objet, soit le plan $P'_0$ fixe, qui coïncide avec le plan focal image dans les conditions où l'objet est à l'infini.

L'établissement de la relation linéaire entre le dépointage $\Delta x'$ et l'angle $\alpha$ de rotation des lames n'est

pas donné ici, car il est à ce jour plus approprié de traiter ces calculs, en fonction des données fournies précédemment, à l'aide d'un programme de calcul assisté par ordinateur. En revanche un mode de réalisation de l'invention est donné ci-après à titre d'exemple.

Dans une réalisation particulière et avantageuse de l'invention, les paramètres des éléments du dispositif ont été fixés pour que, pour chaque lame associée à un objectif, l'angle $\alpha$ soit de même valeur et de signe opposé pour la condition où l'objet est à l'infini, et pour la condition où l'objet est en position $C_{min}$ la plus rapprochée de l'objectif comme il est montré respectivement figure 3b et 3c. De plus l'angle $\alpha$ prend la valeur O, c'est-à-dire que les lames $M_1$ et $M_2$ sont perpendiculaires aux axes optiques pour une position $C_{int}$ intermédiaire de l'objet comme il est montré figure 3a.

Tel que représenté sur la figure 3a, le dispositif selon l'invention est donc formé de deux objectifs $L_1$ et $L_2$ d'axes optiques parallèles respectivement $x'_1\,x_1$ et $x'_2\,x_2$, admettant comme axe de symétrie générale x'x. Le centre de ces objectifs est dans une position $O_1$ et $O_2$ telle que, pour un objet placé en position $C_{int}$ sur l'axe x'x, le plan image est constitué par le plan $P'_0$ défini précédemment, et les lames à faces parallèles $M_1$ et $M_2$ sont perpendiculaires aux axes optiques $x'_1$,$x_1$ et $x'_2\,x_2$ respectivement.

Dans cette réalisation, les lames à faces parallèles $M_1$ et $M_2$ peuvent tourner autour d'un axe dont la trace sur le plan défini par l'axe optique qui leur est respectif et par l'axe général de symétrie, (ici le plan des figures 3), est le point $K_1$ pour $M_1$, et le point $K_2$ pour $M_2$. Ces points $K_1$, ou $K_2$ sont distants de l'axe général de symétrie d'une grandeur h.

Dans le cas de la figure 3a, où les lames à faces parallèles sont perpendiculaires aux axes optiques, l'angle $\alpha$ d'inclinaison des lames sur l'axe optique est nul :

$\alpha = 0$

et le plan-support des lames coupe l'axe général de symétrie du système au point $K_0$.

Les images du point $C_{int}$ formées par le système objectifs-lames sont les points $C'_1$ et $C'_2$ du plan $P'_0$. Ces points images $C'_1$ et $C'_2$ sont distants des axes optiques respectivement $x'_1\,x_1$ et $x'_2\,x_2$ de la valeur de référence $\Delta Y'_0$.De plus les points images $C'_1$ et $C'_2$ sont distants entre eux de la valeur :

$$D_0 = 2H + 2\,\Delta\,Y'_0$$

Tel que représenté sur la figure 3b, le dispositif selon l'invention est réglé pour former sur le plan de référence $P'_0$ l'image d'un objet à l'infini.

A cet effet, les centres optiques des objectifs ont été amenés en position $O_1$Max et $O_2$Max par une translation de valeur $\Delta x'$Max, de telle sorte que le chemin optique entre les centres optiques $O_1$Max et $O_2$Max et le plan $P'_0$ est égal à la distance focale image f' des objectifs.

Les images d'un point à l'infini sont alors les points $C'_1$ et $C'_2$ du plan fixe $P'_0$. Les lames à faces parallèles $M_1$ et $M_2$ sont inclinées d'un angle $\alpha$Max tel que ces images $C'_1$ et $C'_2$ sont distantes des axes optiques $x'_1\,x_1$, et $x'_2\,x_2$ de la valeur de référence $\Delta Y'_0$, et distantes entre elles de la valeur :

$$D_0 = 2H + 2\,\Delta Y'_0$$

Les lames ayant subi une rotation d'un angle $\alpha$Max autour des axes fixes $K_1$ et $K_2$, le plan-support des lames coupe l'axe général de symétrie x'x au point $K_0$Max.

Au déplacement $\Delta x'$Max des centres des objectifs correspond donc un angle de rotation $\alpha$Max des lames obtenu par déplacement de $K_0$ à $K_0$Max du point d'insertion du plan-support des lames avec l'axe de symétrie x'x.

Tel que représenté sur la figure 3c, le dispositif selon l'invention est réglé pour former sur le plan de référence $P'_0$ l'image d'un point en position C Min, qui est la position la plus rapprochée admise par les objectifs.

A cet effet, les centres optiques des objectifs ont été amenés en position $O_1$ Min et $O_2$ Min par une translation de valeur $-\Delta x'$Max, de telle sorte que le chemin optique entre les centres $O_1$ Min et $O_2$ Min et le plan fixe $P'_0$ est égal à la distance image p' conjuguée de la distance objet p.

A ce déplacement $-\Delta x'$ Max des centres des objectifs correspond un angle de rotation de même valeur absolue $|\alpha\ \text{Max}|$ mais de signe contraire comparé à celui de l'angle de rotation des lames pour la situation où l'objet est à l'infini.

Dans les conditions de la figure 3c, le point d'intersection du plan-support des lames avec l'axe de symétrie x'x vient dans la position $K_0$Min telle que :

$$K_0\,K_0\text{Max} = -\,K_0\,K_0\text{Min}$$

Le déplacement du point $K_0$ le long de l'axe x'x qui permet d'obtenir l'angle $\alpha$ de rotation des lames approprié à maintenir le décalage transverse à la valeur constante $\Delta Y'_0$, sera noté pour la commodité de l'exposé : $\Delta K_0$ .

A l'aide des relations qui ont été données précédemment et en tenant compte dans ces relations du décalage constant $e(n-1)n^{-1}$ dû à l'épaisseur des lames, on peut relier la valeur du terme de défocalisation $\Delta x'$ à la valeur du déplacement $\Delta K_0$ par une relation linéaire.

C'est pourquoi, dans une mise en oeuvre particulière de l'invention, le dispositif qui engendre le déplacement $\Delta x'$ des objectifs est rendu solidaire du dispositif qui engendre le déplacement $\Delta K_0$ par des moyens qui rendent les amplitudes de ces déplacements proportionnelles.

Dans cette mise en oeuvre, représentée sur la figure 4, le dispositif selon l'invention comprend deux objectifs 1 identiques (qui correspondent aux objectifs $L_1$ et $L_2$ des figures précédentes) fixés dans une monture 2, laquelle comporte une partie 3 qui se visse sans jeu dans un support 4, et une autre partie 6 qui forme une roue dentée engrenant avec un pignon 7 destiné à la commande du déplacement des objectifs. Le support 4 est solidaire de la structure 5 qui peut être par exemple le capot du dispositif.

Le capot 5 peut être fermé par une lame 17 à faces parallèles transparente au rayonnement utilisé et qui ne joue aucun rôle optique dans le dispositif selon l'invention. La seule fonction de la lame 17 est la protection du dispositif.

Les lames à faces parallèles $M_1$ et $M_2$, permettant la correction de la parallaxe, sont référencées 8 sur la figure 4. Elles peuvent tourner autour des axes 9 qui correspondent aux points $K_1$ et $K_2$ des figures 3. La commande de cette rotation est assurée par l'extrémité 10 de leur support 18 placée dans la fourchette double 11. Lorsque la fourchette 11 subit une translation le long de l'axe x'x, elle entraîne l'extrémité 10 du support des lames 8 qui tournent alors autour des axes 9. L'axe de fixation 12 de la fourchette 11 correspond au point $K_0$ des figures 3.

La fourchette 11 est liée par un dispositif vis-écrou 12 à l'axe 13 supportant le pignon de commande 7.

Le dispositif doit subir un réglage du point initial de fonctionnement ainsi qu'un ajustement de l'amplitude de rotation des lames 8. De tels réglages optiques sont coutumiers de l'homme de métier et ne sont pas décrits ici comme ne faisant pas à proprement parler partie de l'invention.

Les dispositifs référencés 14, sur la figure 4, peuvent être par exemple des tubes amplificateurs d'image, connectés par les cordons d'alimentation 21, ou bien des tubes de prise de vue, ou encore des tubes de projection. Ils sont rendus solidaires de la structure 5 par les supports 15.

Un dispositif d'entraînement 16, qui peut être un moteur alimenté par la connexion 20, permet la commande du dispositif. Ce dispositif d'entraînement commande simultanément la rotation des lames 8 et la translation des objectifs 1, le pas de rotation des bagues de mise au point des objectifs ayant été déterminé en relation avec l'angle de rotation des lames pour que le déplacement $\Delta x'$ des objectifs, engendré par le pignon 7 solidaire de l'axe 12 de la fourchette 11 soit proportionnel au déplacement $\Delta K_0$ de ce dernier.

Dans l'exemple de réalisation illustré par la figure 4, les valeurs numériques suivantes peuvent être adoptées :

– distance focale des objectifs : $f = f' = 30$ mm ;

– indice de réfraction du matériau des lames : $n = 1{,}516$ ;

– épaisseur des lames à faces parallèles : $e = 1{,}93$ mm ;

– distance séparant les axes optiques : $2H = 60$ mm ;

– angle de basculement dans les conditions où l'objet est à l'infini : $\alpha Max = 4°$ ;

– angle de basculement dans la position où l'objet est placé dans une position intermédiaire définie par sa distance au plan focal objet $\pi = 20$ m :

$\alpha Min = 0$ . (le plan-support des lames est alors perpendiculaire à l'axe de symétrie du système) ;

– angle de basculement dans les conditions où l'objet est dans la position la plus rapprochée de l'objectif définie par la distance : $\pi = 10$ m

$$-\alpha\, Max = -4°$$

– distance entre les points fixes de basculement des lames et l'axe général de symétrie : $h = 70$ mm.

Le tableau I donne la valeur du dépointage $\Delta x'$ pour un tel dispositif en fonction des autres variables du système et pour différentes valeurs de ces variables qui sont :

– distance de l'objet au plan focal objet : $\pi$ en m ;

– grandissement : G ;

– dépointage transverse d'un système dépourvu de lames à faces parallèles : $\Delta Y' = HG$ donné en /um;

– distance entre deux points images lorsque le système est dépourvu de lames à faces parallèles : D

donné en mm ;
- angle de basculement des lames : $\alpha$ en degrés ;
- distance entre deux points images du système muni de lames à faces parallèles : $D_0$ en mm ;
- variation du dépointage transverse $\Delta Y'_0$ dans le système muni de lames à faces parallèles : $\delta(\Delta Y'_0)$ en nm.

La distance $D_0$ entre les points images prend la valeur $D_0^* = 60{,}090$ mm pour trois positions du plan objet qui sont :
- la position où $\pi = \infty$
- la position où $\pi = 20$ m qui correspond au point objet $C_{Int}$ ;
- la position où $\pi = 10$ m qui correspond au point objet $C_{Min}$.

**TABLEAU I**

| $\Delta x'$ (mm) | $-\pi$ (m) | $-G$ | $\Delta Y' = \Pi G$ ($\mu m$) | D (mm) | $\alpha$ (°) | $D_0$ (mm) | $\delta(\Delta Y'_0)$ nm |
|---|---|---|---|---|---|---|---|
| 0 | | $3^{-1}.10^{-4}$ | 0 | 60 | -4 | 60,090 = $D_0^*$ | -0,0 |
| 0.003 | 300 | $10^{-4}$ | 3 | 60,006 | -3,73411 | 60,089990 | -0,5 |
| 0.010 | 90 | $3^{-1}.10^{-3}$ | 10 | 60,020 | -3,113108 | 60,0899926 | -3,7 |
| 0.015 | 60 | $5.10^{-4}$ | 15 | 60,030 | -2,669075 | 60,0899912 | -4,4 |
| 0.020 | 45 | $2 \times 3^{-1} \times 10^{-3}$ | 20 | 60,040 | -2,224721 | 60,0899908 | -4,6 |
| 0.025 | 36 | $25 \times 3^{-1} \times 10^{-4}$ | 25 | 60,050 | -1,780099 | 60,0899914 | -4,3 |
| 0.030 | 30 | $10^{-3}$ | 30 | 60,060 | -1,335262 | 60,0899928 | -3,6 |
| 0.040 | 22.5 | $40 \times 3^{-1} \times 10^{-4}$ | 40 | 60,080 | -0,445199 | 60,0899974 | -1,3 |
| 0.045 | 20 | $1,5 \times 10^{-3}$ | 45 | 60,090 | 0 | 60,090 = $D_0^*$ | 0,0 |
| 0.050 | 18 | $5 \times 3^{-1} \times 10^{-3}$ | 50 | 60,100 | +0,445159 | 60,0900026 | +1,3 |
| 0.060 | 15 | $2 \times 10^{-3}$ | 60 | 60,120 | +1,335262 | 60,0900072 | +3,6 |
| 0.075 | 12 | $2,5 \times 10^{-3}$ | 75 | 60,150 | +2,669075 | 60,0900088 | +4,4 |
| 0.080 | 11,25 | $8 \times 3^{-1} \times 10^{-3}$ | 80 | 60,160 | +3,113108 | 60,0900074 | +3,7 |
| 0.090 | 10 | $3 \times 10^{-3}$ | 90 | 60,180 | +4 | 60,090 = $D_0^*$ | 0,0 |

Malgré l'interposition des lames à faces parallèles selon l'invention, il reste une variation résiduelle de la distance $D_0$. Afin d'apprécier la valeur de cette variation résiduelle la dernière colonne du tableau I donne la variation résiduelle de $\Delta Y'_0$ sur une voie, cette variation résiduelle étant notée $\delta(\Delta Y'_0)$. Elle se calcule à partir de $D_0$ en écrivant :

$$\delta(\Delta y'_0) = (D_0 - D_0^*)/2$$

La figure 5 représente cette variation résiduelle δ ($\Delta y'_0$) en fonction du terme de défocalisation $\Delta x'$.

On constate que dans l'exemple de réalisation décrit cette variation est toujours inférieure à 5 nm alors qu'elle atteint 90/um dans un dispositif dépourvu de lames selon l'invention.

L'invention n'est pas limitée à un dispositif à deux objectifs mais peut encore être appliquée, par exemple, à un dispositif à trois objectifs admettant un axe général de symétrie et des axes optiques parallèles. L'invention est alors bien adaptée à la prise de vue, ou à la projection d'images trichromes.

## Revendications

1. Dispositif optique de prise de vue ou de projection, comportant au moins deux objectifs $L_1$, $L_2$,... dont les axes optiques sont parallèles à un axe général de symétrie du dispositif, doté d'un système de mise au point permettant la formation des images, sur ou bien la projection à partir d'un plan de référence fixe, par translation simultanée des objectifs parallèlement à l'axe général de symétrie, et comportant, pour réduire la parallaxe engendrée par les objectifs, un système de lames à faces parallèles $M_1$, $M_2$,... qui admet pour axe de symétrie l'axe général de symétrie du dispositif optique, chaque lame à faces parallèles étant placée entre chaque objectif et un plan de référence fixe ($P'_0$) et inclinée sur l'axe optique de l'objectif auquel elle est appliquée d'un angle α prévu en fonction de l'épaisseur et de l'indice du matériau de la lame, ainsi qu'en fonction des grandeurs focales et des distances entre objectifs, pour produire un décalage transverse $\Delta Y'_0$ constant des points du plan de référence fixe conjugués des points de l'axe général de symétrie X'X du dispositif, quelle que soit la position de ces points sur cet axe, et la rotation α des lames étant en corrélation avec le système de mise au point des objectifs, caractérisé en ce que, les lames à faces parallèles étant maintenues dans un plan-support, l'inclinaison des lames $M_1$, $M_2$... sur l'axe optique des objectifs est obtenue par la rotation du plan-support des lames autour d'un axe fixe $K_1$, $K_2$... perpendiculaire à un plan défini par l'axe optique de l'objectif et l'axe général de symétrie X'X du système, de telle sorte que les plans-supports des lames se coupent en un point $K_0$ de l'axe général de symétrie X'X, dont le mouvement sur cet axe est lié par une relation linéaire à la rotation α des lames, en ce que le système permettant la corrélation de la rotation des lames à faces parallèles avec le système de mise au point des objectifs est un dispositif mécanique engendrant la translation du point mobile $K_0$ d'intersection des plans-supports des lames sur l'axe général X'X de symétrie et engendrant de façon solidaire une translation simultanée et proportionnelle des objectifs $L_1$, $L_2$ parallèlement à cet axe, l'amplitude de ces translations et leur sens étant prévus pour obtenir à la fois la mise au point sur le plan fixe de référence $P'_0$ et l'inclinaison appropriée α des lames à faces parallèles, pour obtenir ledit décalage transverse constant, et en ce que la valeur de la translation des objectifs, pour obtenir ladite mise au point sur le plan fixe $P'_0$ de référence, dans la situation de visée à l'infini, est de même grandeur que et de sens contraire à la valeur de cette translation dans la situation de visée à distance minimale, par rapport à une situation de visée intermédiaire en corrélation avec la position du point mobile $K_0$ d'intersection des lames sur l'axe de symétrie X'X pour laquelle ces lames $M_1$, $M_2$... sont perpendiculaires aux axes optiques des objectifs $L_1$, $L_2$... auxquels elles sont appliquées.

## Ansprüche

1. Optisches Aufnahme- oder projektionsgerät mit wenigstens zwei Objektiven $L_1$, $L_2$, ..., deren optische Achsen zu einer allgemeinen Symmetrieachse des Geräts parallel verlaufen, mit einem Fokussiersystem zur Bildung von Bilder auf, oder die projektion von Bilder von einer festen Bezugsfläche aus durch Simultanverschiebung der Objektive parallel zur allgemeinen Symmetrieachse, und mit einem System von planparallelen Platten $M_1$, $M_2$, ..., zum Verringern der von den Objektiven erzeugten Parallaxe, welches System als Symmetrieachse die allgemeine Symmetrieachse des optischen Geräts hat, wobei jede planparallele Patte zwischen jedem Objektiv und einer festen Bezugsfläche ($P'_0$) angeordnet ist und gegen die optische Objektivachse geneigt ist unter einem winkel α in Abhängig-keit von der Dicke und vom Index des Plattenmaterials sowie in Abhängigkeit von den Brennpunktsabständen und den Abständen zwischen Objektiven zum Bewirken einer konstanten Querverschiebung $\Delta Y'_0$ der den Punkten der allgemeinen Symmetrieachse X'X des Geräts zugeordneten Punkte der festen Bezugsfläche angebracht ist, ungeachtet der von diesen Punkte auf dieser Symmetrieachse eingenommenen Positionen, und wobei die Drehung α der planparallelen Platten mit dem Fokussiersystem für die Objektive korreliert ist,dadurch gekennzeichnet, daß die planparallelen Platten auf einer Trägerfläche gehalten werden, die Neigung der Platten $M_1$, $M_2$ ... gegen die optische Achse der Objektive durch die Drehung der Trägerfläche der Platten um eine feste Achse $K_1$, $K_2$... senkrecht zu einer festen Ebene, definiert von der optischen Achse des Objektivs und der allgemeinen Sym-

metrieachse X'X des Systems, derart erhalten wird, daß die Trägerflächen der Platten sich in einem punkt $K_0$ der allgemeinen Symmetrieachse X'X schneiden, dessen Verlagerung auf dieser Achse mit einem linearen Zusammenhang mit der Drehung $\alpha$ der Lamellen verknüpft ist, daß das System die Korrelation der Drehung der planparallelen Platten mit dem Fokussiersystem für die Objektive eine mechanische Einrichtung ist, die die Verschiebung des bewegbaren Schnittpunkts $K_0$ der Trägerflächen der platten entlang der allgemeinen Symmetrieachse X'X und auf solidarische Weise eine gleichzeitige und proportionale Verschiebung der Objektiven $L_1$ und $L_2$ parallel zu dieser Achse bewirken, wobei die Amplitude dieser Verschiebungen und ihre Richtung zum gleichzeitigen Bewirken der Scharfeinstellung auf die feste Bezugsfläche $P'_0$ und die geeignete $\alpha$-Neigung der planparallelen Platten vorgesehen sind zum Erhalten der konstanten Querverschiebung, und daß der Wert der Verschiebung der Objektive, zum Bewirken dieser Scharfeinstellung auf die feste Bezugsfläche $P'_0$ in dem Zustand der Unendlichkeitseinstellung, die gleiche Größe hat und das entgegengesetzte Vorzeichen des Wertes dieser Verschiebung im Zustand der Mindestabstandeinstellung in bezug auf eine Zwischenabstandeinstellung in Korrelation mit der Position des bewegbaren Schnittpunktes $K_0$ der Platten auf der Symmetrieachse X'X, für welche Position diese Platten $M_1$, $M_2$ ... senkrecht zu den optischen Achsen der Objektive $L_1$, $L_2$ ... verlaufen, denen sie zugeordnet sind.

## Claims

1. Optical pick-up or projection device, comprising at least two objectives $L_1$, $L_2$, ... whose optical axes are parallel to general axis of symmetry of the device, provided with a focusing system permitting the formation of images on, or the projection from a fixed reference plane by means of simultaneous translation of the objectives parallel to the general axis of symmetry, and for reducing the parallax produced by the objectives, a system of parallel-faced plates $M_1$, $M_2$ ... which has the general axis of symmetry of the optical device as its axis of symmetry, each parallel-faced plate being placed between each objective and a fixed reference plane ($P'_0$) and being inclined to the optical axis of the objective to which it is applied to an angle $\alpha$ determined as a function of the thickness and of the refractive index of the material of the plate, and as a function of the focal lengths and of the distances between objectives, to produce a constant transverse offset $\Delta Y'_0$ of the points in the fixed reference plane which are conjugates of the points of the general axis of symmetry X'X of the device, irrespective of the position of said points on this axis, the rotation $\alpha$ of the plates being correlated with the system for focusing the objectives, characterized in that, while the parallel-faced plates are maintained in a support plane, the inclination of the plates $M_1$, $M_2$, ... to the optical axis of the objectives is produced by means of the rotation of the support plane of the plates around a fixed axis $K_1$, $K_2$, ... perpendicular to a plane defined by the optical axis of the objective and the general axis of symmetry X'X of the system, so that the support planes of the planes intersect at a point $K_0$ of the general axis of symmetry X'X whose movement on this axis is related by a linear relationship to the rotation $\alpha$ of the plates, in that the system permitting correlation of the rotation of the parallel-faced plates with the system for focusing the objectives is a mechanical device producing the translation of the movable point $K_0$ of intersection of the support planes of the plates on the general axis of symmetry X'X and producing in an interdependent manner, a simultaneous and proportional translation of the objectives $L_1$, $L_2$ parallel to this axis, the amplitude of these translations and their direction being determined to produce both the focusing in the fixed reference plate $P'_0$ and the appropriate inclination $\alpha$ of the parallel-faced plates for obtaining said constant transverse offset, and in that the value of the translation of the objectives, in order to produce said focusing in the fixed reference plane $D'_0$ in the situation of aiming at infinity, is of the same magnitude as, and opposite in direction to, the value of this translation in the situation of aiming at minimum distance, when compared with a situation of intermediate aim in correlation with the position of the movable point $k_0$ of intersection of the plates on the axis of symmetry, X'X for which these plates $M_1$, $M_2$, ... are perpendicular to the optical axes of the objects $L_1$, $L_2$, ... to which they are applied.

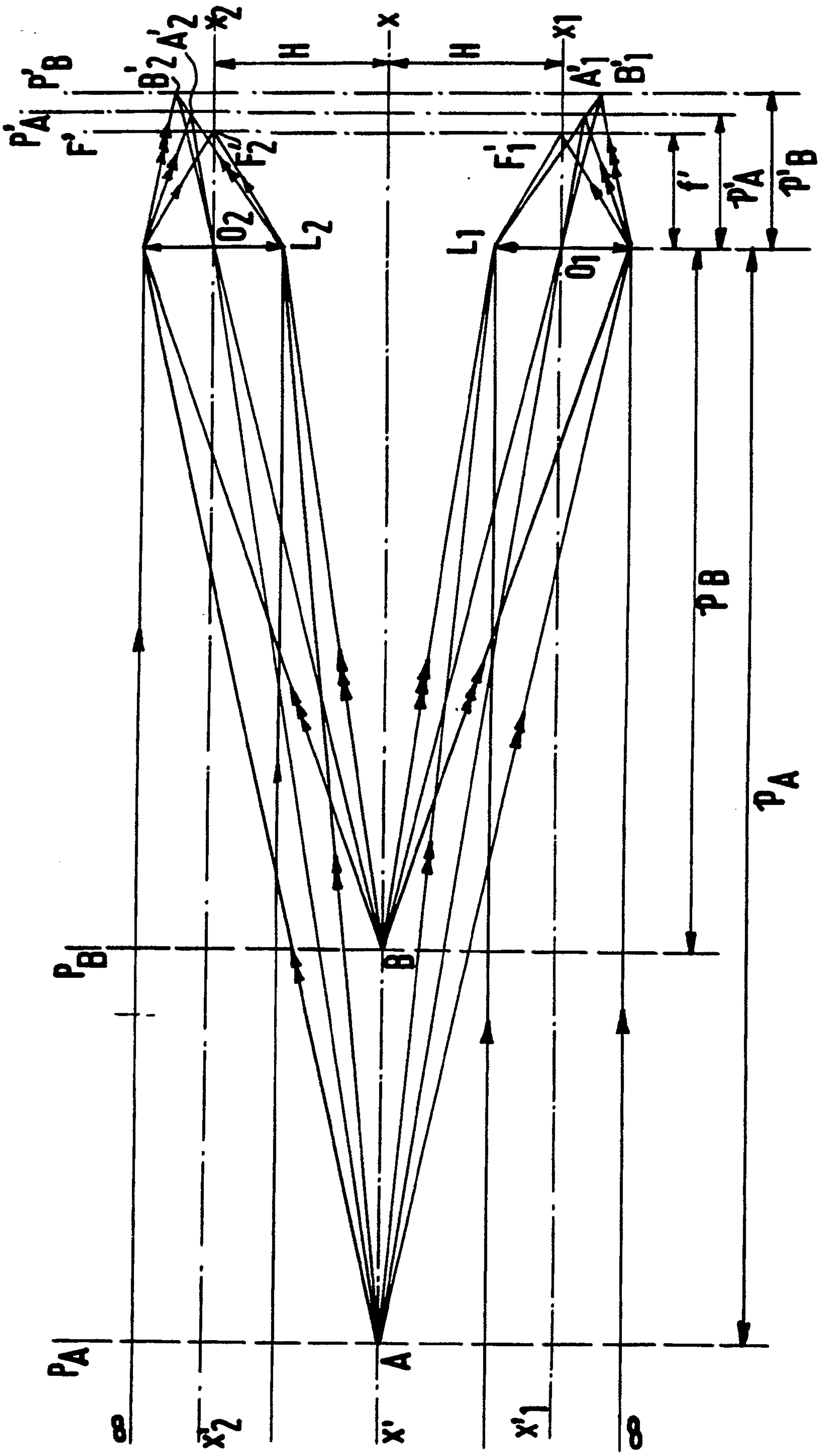

FIG.1a

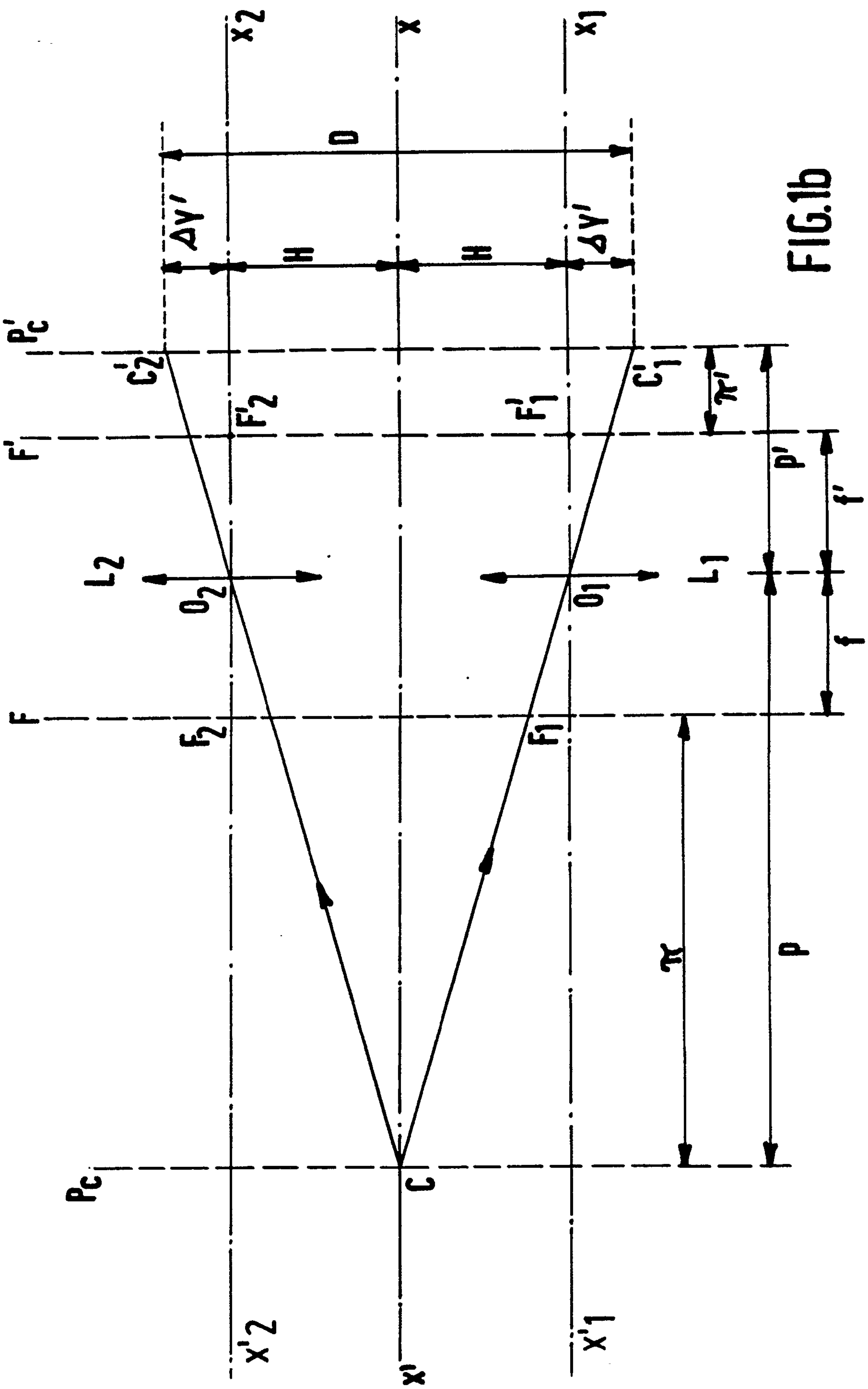
X2
X
X1
D
ΔY'
H
H
ΔY'
P'c
C'2
F'2
F'1
C'1
π'
F'
p'
f'
L2
O2
O1
L1
f
F
F2
F1
π
p
Pc
C
X'2
X'
X'1

FIG.1b

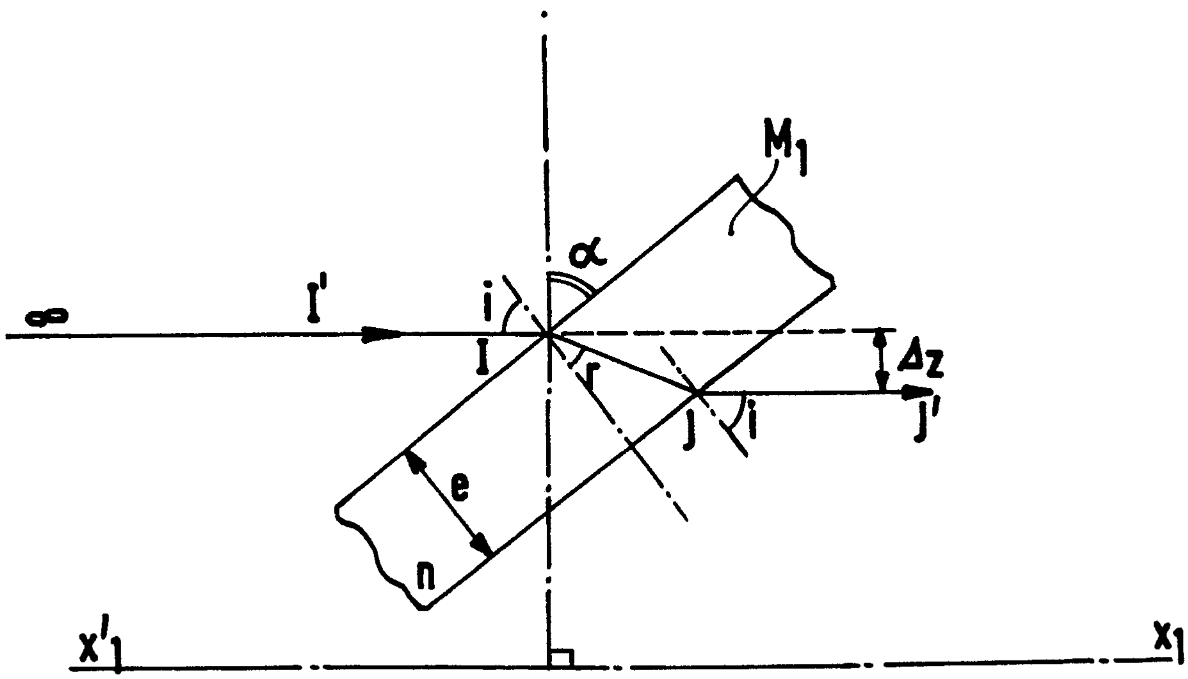


FIG. 2a

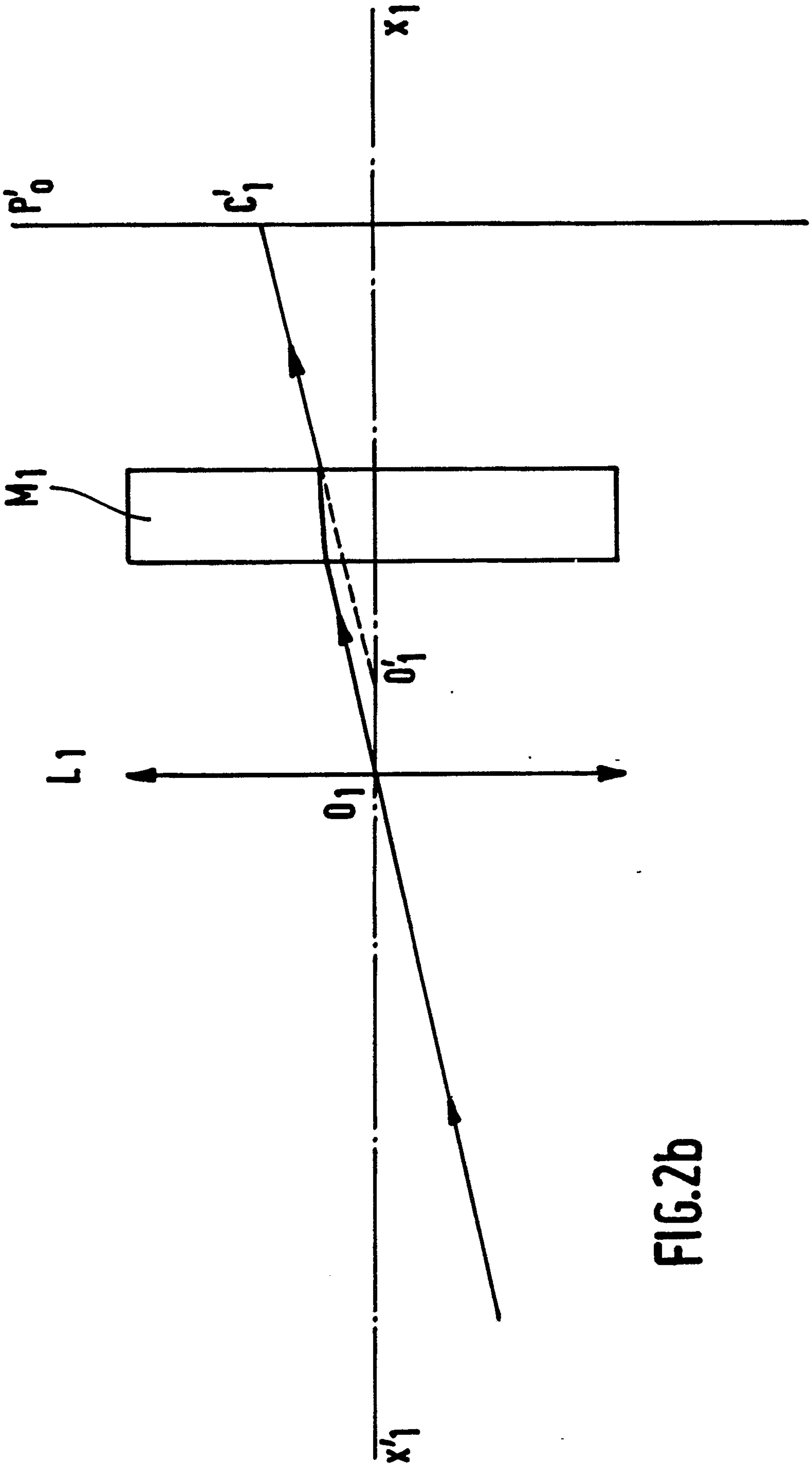


FIG.2b

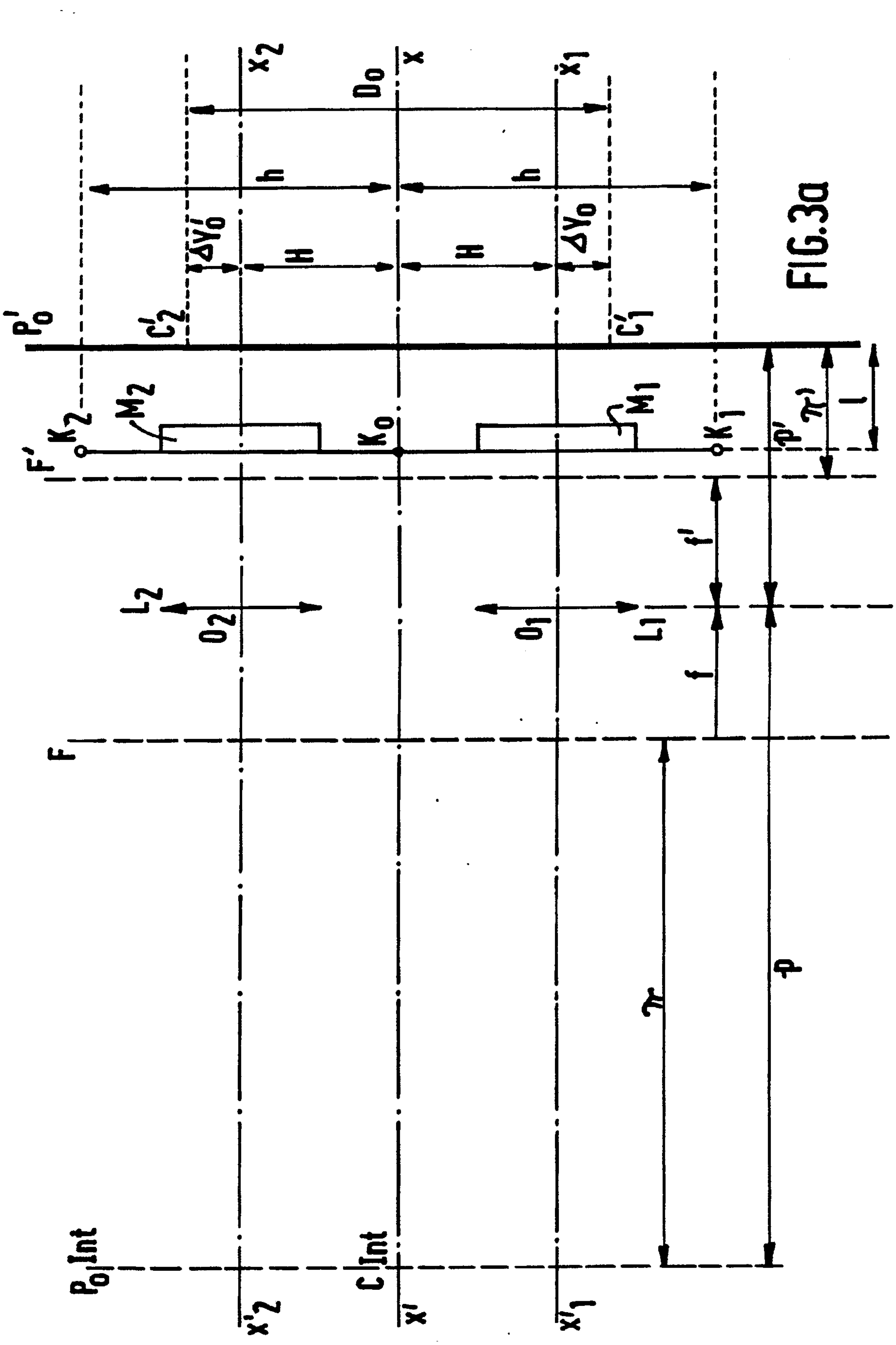
x2
x
x1
D0
h
h
ΔY'0
H
H
ΔY0
P'0
C'2
C'1
F'
K2
M2
K0
M1
K1
p'
π'
l
f'
L2
O2
O1
L1
f
F
π
p
P0 Int
C Int
x'2
x'
x'1

FIG.3a

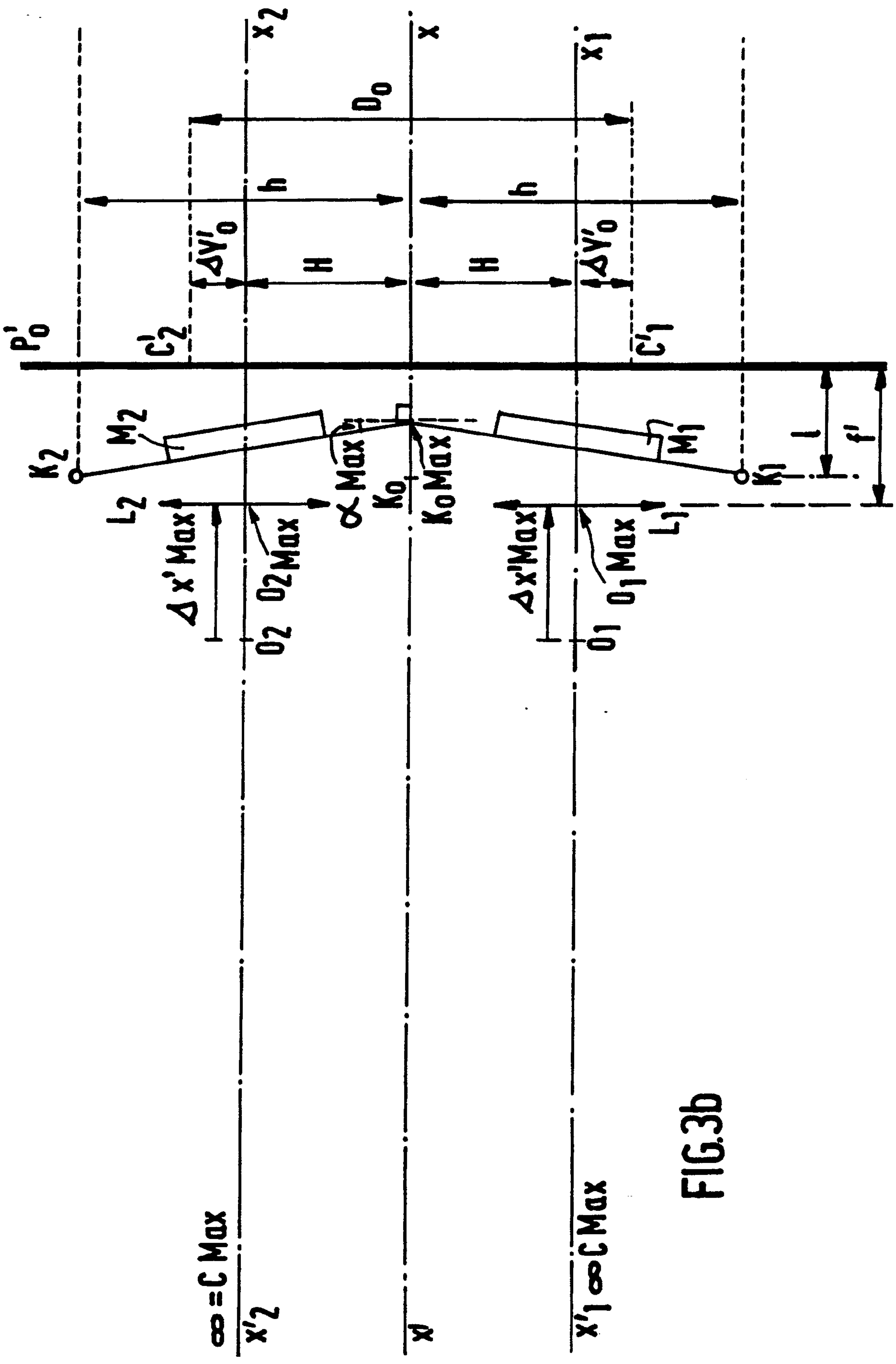
x2
x
x1
Do
h
h
ΔY'o
ΔY'o
H
H
P'o
C'2
C'1
M2
M1
K2
K1
l
f'
L2
L1
α Max
Ko
KoMax
Δx'Max
Δx'Max
O2Max
O1Max
O2
O1
∞=C Max
x'2
x'
x'1 ∞C Max

FIG.3b

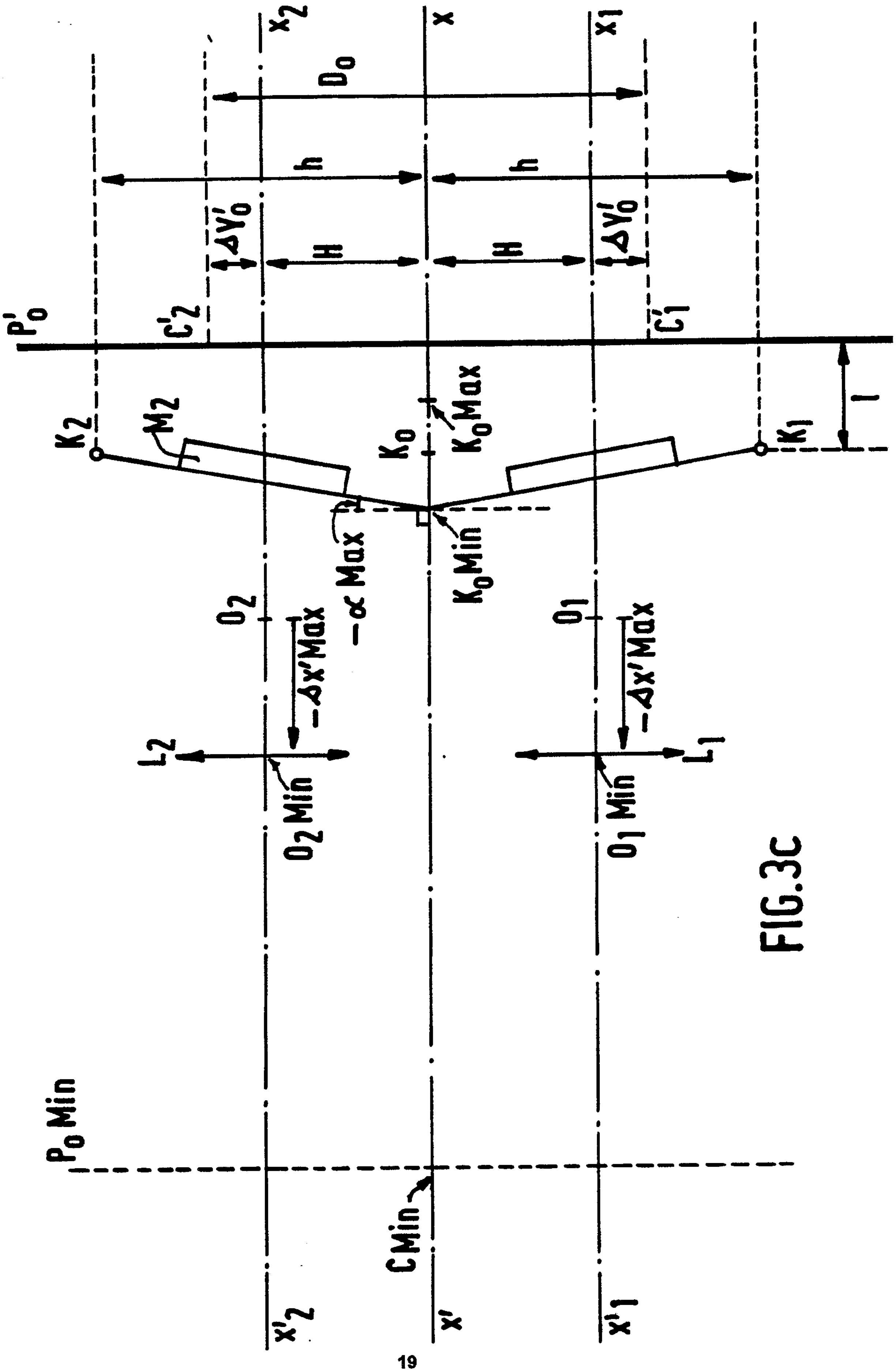
x2
x
x1
D0
h
h
ΔY'0
H
H
ΔY'0
P'0
C'2
C'1
l
K2
M2
K0
K0Max
K1
-α Max
K0Min
O2
O1
-Δx'Max
-Δx'Max
L2
L1
O2Min
O1Min
P0Min
CMin
x'2
x'
x'1

FIG.3C

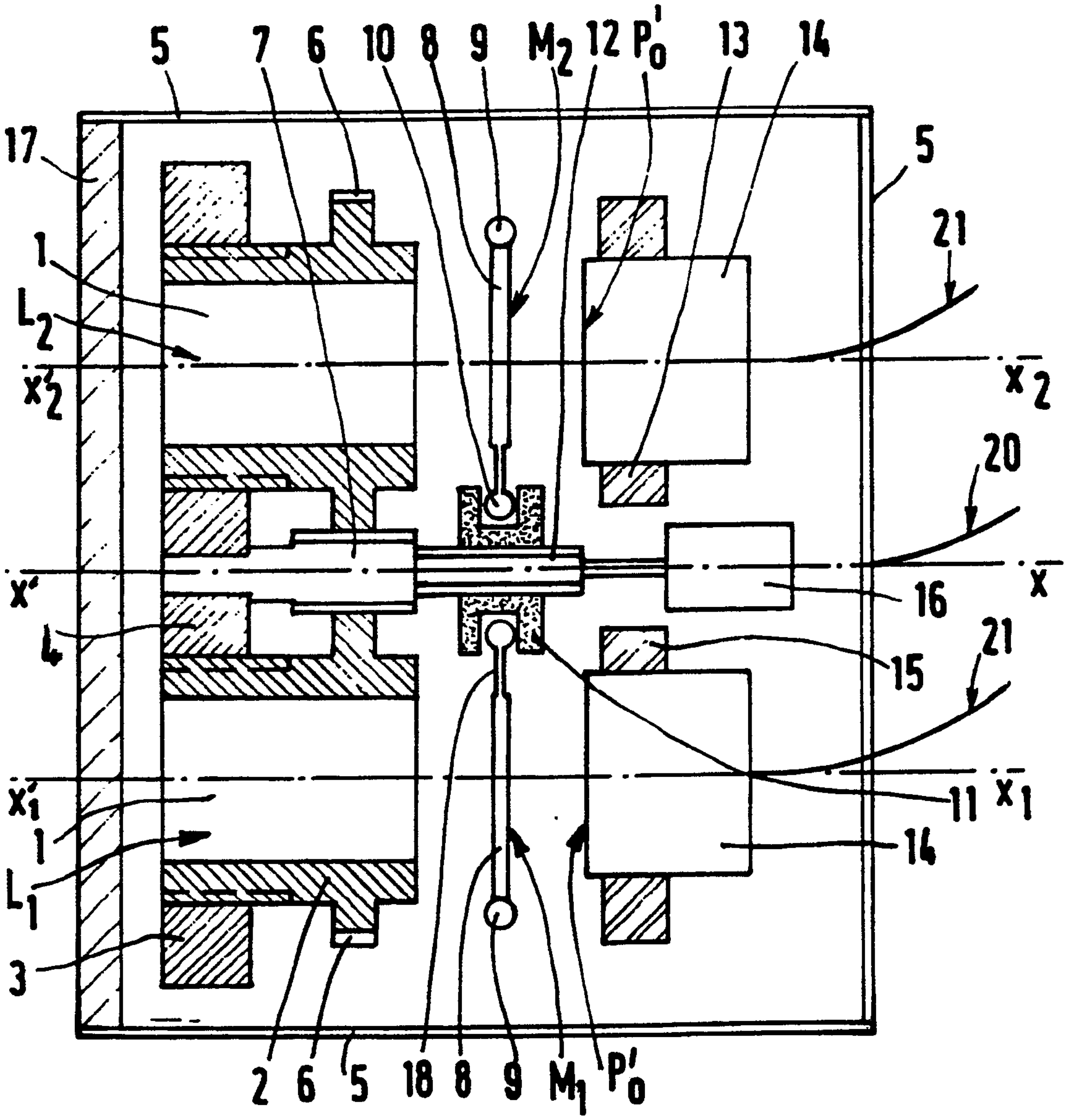
5
7
6
10
8
9
M2
12
P'0
13
14
17
5
1
21
L2
x'2
x2
20
x'
x
4
16
15
21
x'1
11
x1
1
14
L1
3
2
6
5
18
8
9
M1
P'0

FIG.4

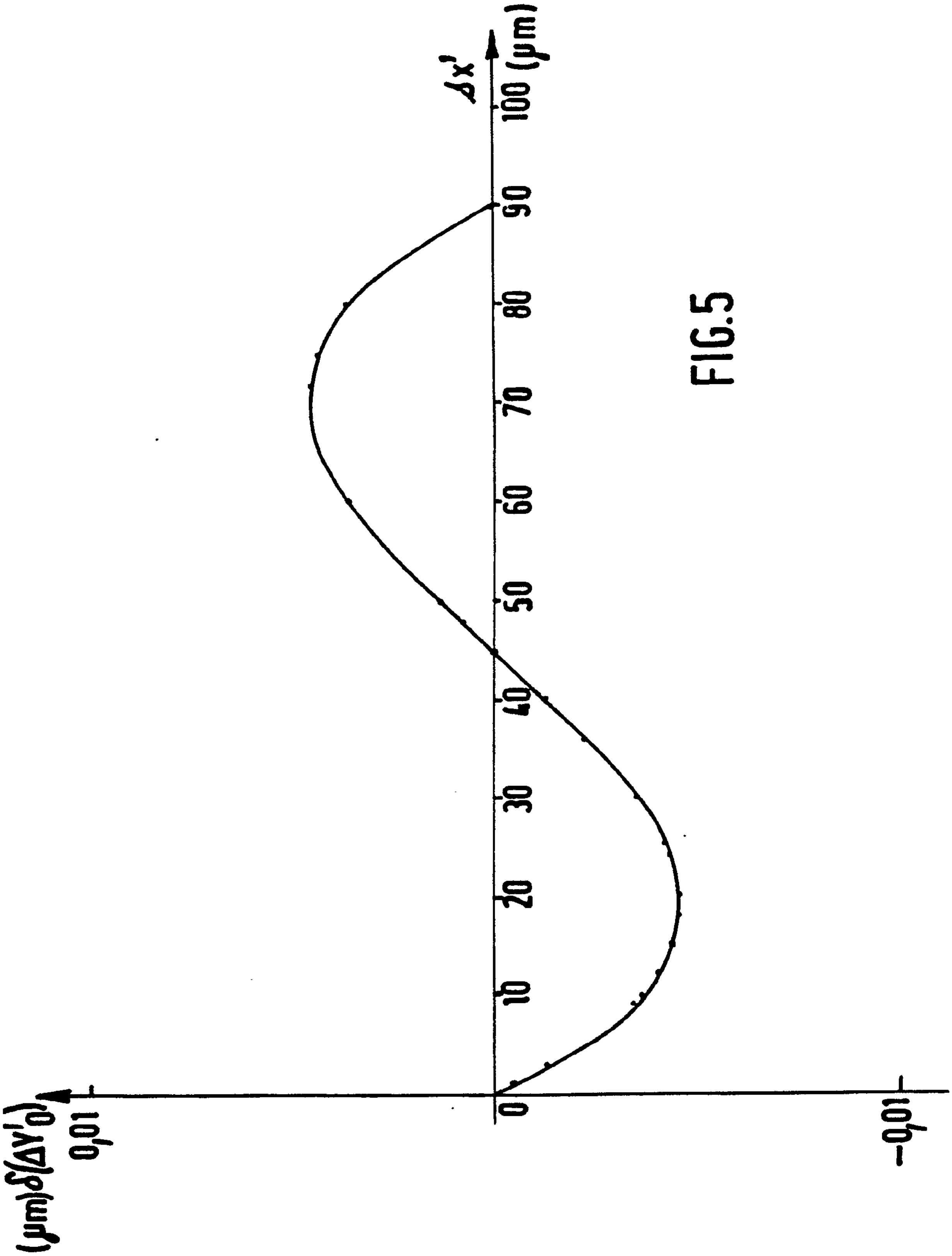


FIG.5